(19) Europäisches Patentamt
European Patent Office
Office européen des brevets

(11) **EP 3 428 123 A1**

(12) **EUROPÄISCHE PATENTANMELDUNG**

(43) Veröffentlichungstag:
**16.01.2019  Patentblatt 2019/03**

(51) Int Cl.:
***C01G 41/04*** *(2006.01)*

(21) Anmeldenummer: **17181487.4**

(22) Anmeldetag: **14.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **UMICORE AG & CO. KG**
**63457 Hanau-Wolfgang (DE)**

(72) Erfinder:
• **SUNDERMEYER, Joerg**
**35041 Marburg (DE)**

• **HAMEL, Lisa**
**35096 Weimar (DE)**
• **RAMON MUELLER, Ruben**
**61130 Nidderau (DE)**
• **RIVAS NASS, Andreas**
**64625 Bensheim (DE)**
• **WOERNER, Eileen**
**61130 Nidderau (DE)**
• **DOPPIU, Angelino**
**63500 Seligenstadt (DE)**
• **KARCH, Ralf**
**63801 Kleinostheim (DE)**

(54) **VERFAHREN ZUR REDUKTION VON METALLHALOGENIDEN**

(57)  Gegenstand der Erfindung ist ein Verfahren zur Herstellung einer Verbindung der Formel $MX_n$ aus einer Vorläuferverbindung der Formel $MX_m$, wobei
M ein Metall ist,
X ein Halogenid ist, ausgewählt ist aus F, Cl, Br, J,
m ausgewählt ist aus einer Zahl von 2 bis 8, und
n ausgewählt ist aus einer Zahl von 1 bis 7, mit der Maßgabe, dass $n < m$ ist, umfassend einen Verfahrensschritt, bei dem die Vorläuferverbindung mit einer Silanverbindung zu der Verbindung der Formel $MX_n$ reduziert wird.

EP 3 428 123 A1

**Beschreibung**

Die Erfindung betrifft ein Verfahren zur Herstellung eines Metallhalogenids aus einer Vorläuferverbindung, die ebenfalls ein Metallhalogenid ist, umfassend einen Verfahrensschritt, bei dem die Vorläuferverbindung mit einer Silanverbindung reduziert wird.

Stand der Technik

In der anorganischen und organometallischen Chemie besteht ein kontinuierlicher Bedarf nach Metallhalogeniden in verschiedenen Oxidationsstufen. Dabei ist es im Allgemeinen schwierig, ein Metallhalogenid in einer konkreten Oxidationsstufe bereitzustellen, wenn analoge Metallhalogenide sowohl höherer als auch niedrigerer Oxidationsstufe existieren. Dies ist insbesondere problematisch, wenn die analogen Metallhalogenide relative stabil sind. Die präparativen Schwierigkeiten bestehen dann darin, dass zum einen eine effektive Reduktion zu einem Metallhalogenid mit geringerer Oxidationsstufe stattfinden muss, zum anderen aber die unerwünschte Folgereaktion zu dem Metallhalogenid mit noch niedrigerer Oxidationsstufe, oder auch zu dem elementaren Metall, verhindert werden muss. Solche Reaktionen sind daher nur erfolgreich, wenn ein selektives Reduktionsmittel zur Verfügung steht. Auch ist oft eine sorgfältige Einstellung und Kontrolle der Verfahrensbedingungen erforderlich. Allgemein ist es aus diesem Grund oft schwierig, ein solches Metallhalogenid in hoher Ausbeute und Reinheit herzustellen.

Ein weiteres Problem besteht darin, dass viele Metallhalogenide in höheren Oxidationsstufen eine geringe Stabilität aufweisen. Beispielsweise können derartige Reduktionsreaktionen nicht bei einer notwendigen hohen Reaktionstemperatur durchgeführt werden, wenn das Produkt oder das Edukt thermisch instabil ist.

Eine weitere Schwierigkeit besteht darin, dass die Trennung verschiedener Metallhalogenide desselben Metalls oft nicht einfach ist. Daher wird bei solchen Reaktionen oft keine hohe Endausbeute eines gereinigten Produktes erhalten, obwohl die Ausbeute der eigentlichen Reduktion relativ hoch ist. Solche Reaktionen sind nur dann zur großtechnischen Produktion geeignet, wenn auch Verfahren zur Aufreinigung der durch Reduktion erhaltenen Metallhalogenide zur Verfügung stehen.

Insgesamt ist also wegen unerwünschten Folgereaktionen, Stabilitätsproblemen und Aufreinigungsproblemen schwierig, durch solche gezielten Reduktionsreaktionen ein gewünschtes Metallhalogenid in hoher Ausbeute herzustellen.

Ein Beispiel für eine Verbindung, die durch eine solche gezielte Reduktion hergestellt werden kann, ist Wolframpentachlorid ($WCl_5$, Wolfram(V)-chlorid). Dieser sublimierbare Feststoff weist eine geringe Stabilität auf und zersetzt sich beispielsweise schnell in Gegenwart von Wasser. Gemäß dem Stand der Technik erfolgt die Herstellung üblicherweise durch Reduktion von Wolframhexachlorid ($WCl_6$, Wolfram(VI)-chlorid). Dabei wurden verschiedene Reduktionsmittel vorgeschlagen, um unerwünschte Folgereaktionen zu niedrigwertigen Wolframhalogeniden zu verhindern. So wurden im Stand der Technik verschiedene Verfahren zur Reduktion von Wolframhexachlorid beschrieben, die als Reduktionsmittel Wasserstoff, roten Phosphor, Aluminium, Magnesium oder Zinnchlorid nutzen. Diese Verfahren sind im Allgemeinen verbesserungsbedürftig, weil Wolframpentachlorid nicht in hoher Ausbeute erhalten wird, und dabei auch die Abtrennung aus dem Reaktionsgemisch problematisch ist. Nachteilig ist auch, dass solche Reaktionen im Allgemeinen bei hohen Temperaturen durchgeführt werden, was die Ausbeute und Produktqualität verringert. Ein weiterer Nachteil ist, dass viele dieser Verfahren ein weiteres Metall in den Reaktionsansatz einführen, was weitere Probleme bei der Aufreinigung mit sich bringt. Die Verfahren sind daher für präparative Anwendungen im industriellen Maßstab ungeeignet.

Im Stand der Technik wurde außerdem vorgeschlagen, Wolframhexachlorid mit chlorierten Olefinen zu reduzieren. McCann et al. (Inorganic Synthesis, XIII, 1972, Verleger: F. A. Cotton, McGraw-Hill, Inc.) beschreiben eine selektive Reaktion mit Tetrachlorethylen. Die Reaktion wird bei 100°C innerhalb von 24 Stunden durchgeführt. Die Ausbeute soll bei >90% liegen. Das Verfahren ist relativ energieintensiv, da es neben der relativ hohen Reaktionstemperatur auch eine starke Lichteinstrahlung erfordert. Dabei ist die präzise Einstellung der Reaktionsbedingungen hinsichtlich Reaktionsdauer und Lichtintensität erforderlich, um die Bildung von Nebenprodukten zu verhindern. Die Reaktion ist daher noch verbesserungsbedürftig und für Anwendungen im großen Maßstab nur wenig geeignet.

Ein weiteres Verfahren zur Reduktion von Wolframhexachlorid mit Olefinen wurde in drei Publikation von Thorn-Csanyi et al. beschrieben (Journal of Molecular Catalysis, Nr. 65, 1991, Seiten 261 bis 267; Nr. 36, 1986, Seiten 31 bis 38; sowie Nr. 28, 1985, Seiten 37 bis 48). Als Reduktionsmittel werden nicht-substituierte Olefine eingesetzt, wie 2-Penten. Thorn-Csanyi, 1991, beschreibt eine Reaktion zwischen Wolframhexachlorid und Olefinen, die nach Angabe der Autoren quantitativ verlaufen soll. Allerdings wurde das Produkt Wolframpentachlorid nicht isoliert, sondern lediglich die Bildung in dem kruden Reaktionsansatz durch UV-VIS-Spektroskopie bestimmt. Eine Aufreinigung aus dem kruden Reaktionsgemisch nach der Reduktion wird in Thorn-Csanyi nicht beschrieben. Daher ist unklar, ob die Trennung verschiedener thermisch instabiler Wolframhalogenide ohne erhebliche Ausbeuteverluste überhaupt möglich wäre. Insgesamt wird also nicht offenbart, wie reines Wolframpentachlorid tatsächlich herzustellen ist.

Ein weiterer Nachteil der Verfahren von Thorn-Csanyi ist, dass die als Reaktionsmittel eingesetzten Olefine eine relativ hohe Reaktivität aufweisen. Daher wird das gewünschte Produkt Wolframpentachlorid in Folgereaktionen überreduziert. So wird im Thorn-Csanyi, 1986, beschrieben, dass nach etwa 30 min Wolframpentachlorid erhalten wurde, das bei zunehmender Reaktionsdauer wieder abgebaut wurde. Solche Folgereaktionen sind nachteilig, weil sie die Ausbeute des gewünschten Produktes verringern. Der Reaktionsverlauf muss zudem genau eingestellt und kontrolliert werden, damit die Reaktion zu einem definierten Zeitpunkt abgebrochen werden kann.

Ein weiterer Nachteil der Verfahren von Thorn-Csanyi ist, dass die als Reduktionsmittel eingesetzten Olefine, wie 2-Penten, nicht ohne weiteres in großen Mengen und in reiner Form verfügbar sind. Solche Olefine werden im Allgemeinen aus fossilen Quellen durch Fraktionieren gewonnen. Daher enthalten sie relativ hohe Anteile sehr ähnlicher, undefinierter Verunreinigungen. Hochreine Isomere von Penten, wie *cis*- oder *trans*-Penten-Isomere, sind daher nicht ohne weiteres verfügbar, sehr teuer und aus diesen Gründen zum Einsatz in großtechnischen Verfahren wenig geeignet.

Ein weiterer Nachteil des Verfahrens von Thorn-Csanyi ist, dass das Olefin als Radikalfänger in Gegenwart von Chlorradikalgeneratoren wie $WCl_6$ zu radikalischen Zwischenprodukten abreagiert, die zur Bildung am Produkt anhaftender klebriger Olefin-Dimere und Olefin-Oligomere neigen. Daher ist es nicht ohne weiteres möglich, das Produkt in hoher Reinheit zu erhalten.

Pentene sind auch nicht leicht zu handhaben, da sie relativ niedrige Siedepunkte im Bereich von 20°C bis 40°C aufweisen und daher relativ flüchtig sind. Aus diesen Gründen sind die Verfahren von Thorn-Csanyi verbesserungsbedürftig und insbesondere für die industrielle Anwendung nur wenig geeignet.

## Aufgabe der Erfindung

Der Erfindung liegt die Aufgabe zugrunde, Verfahren bereitzustellen, welche die oben beschriebenen Nachteile überwinden. Dabei soll ein einfaches und effizientes Verfahren zur Herstellung von Metallhalogeniden bereitgestellt werden, bei dem das Produkt in hoher Ausbeute erhalten wird. Das Verfahren soll unter Verwendung einfach zugänglicher Ausgangsstoffe durchführbar sein, möglichst energieeffizient sein und dabei insbesondere bei niedriger Temperatur durchführbar sein. Das Produkt soll dabei auch auf einfache Weise aus dem Reaktionsansatz abtrennbar sein. Zusätze, die das Produkt verunreinigen und schwer trennbar sind, sollen vermieden werden. Das Verfahren soll auch im industriellen Maßstab durchführbar sein. Das Verfahren soll insbesondere geeignet sein, um Wolframpentachlorid herzustellen.

## Offenbarung der Erfindung

Überraschenderweise wird die der Erfindung zugrunde liegende Aufgabe gelöst durch Verfahren gemäß den Patentansprüchen.

Gegenstand der Erfindung ist ein Verfahren zur Herstellung einer Verbindung der Formel $MX_n$ aus einer Vorläuferverbindung der Formel $MX_m$, wobei

M ein Metall ist,
X ein Halogenid ist, ausgewählt ist aus F, Cl, Br, J,
m ausgewählt ist aus einer Zahl von 2 bis 8, und
n ausgewählt ist aus einer Zahl von 1 bis 7, mit der Maßgabe, dass n < m ist, umfassend einen Verfahrensschritt, bei dem die Vorläuferverbindung mit einer Silanverbindung zu der Verbindung der Formel $MX_n$ reduziert wird.

Das erfindungsgemäße Verfahren dient zur Herstellung eines Metallhalogenids aus einer Vorläuferverbindung, die ein analoges Metallhalogenid höherer Oxidationsstufe ist. Die Umsetzung erfolgt durch eine Reduktionsreaktion, die nachfolgend auch vereinfacht als "die Reaktion" bezeichnet wird. Es wurde überraschenderweise gefunden, dass ein Metallhalogenid der Formel $MX_m$ mit Silanverbindungen, insbesondere mit Organosilanen, als Reduktionsmittel gezielt zu einem niedrigerwertigen Metallhalogenid der Formel $MX_n$ reduziert werden kann, ohne dass eine signifikante weitere Reduktion (Überreduktion) erfolgt, bei der das Produkt $MX_n$ weiter reduziert würde, beispielsweise zu einem Metallhalogenid mit noch niedrigerer Oxidationsstufe oder zu dem Metall selbst.

Das Edukt wird durch die Formel $MX_m$ und das Produkt durch die Formel $MX_n$ beschrieben. Im Rahmen dieser Anmeldung stehen diese Formeln allgemein für Verbindungen, bei denen das molare Verhältnis von Metall zu Halogen 1 : m bzw. 1 : n ist. Die Formeln sind daher nicht einschränkend so zu verstehen, dass ein konkretes Molekül $MX_n$ oder $MX_m$ vorliegt. Die Verbindungen können vielmehr auch Dimere, Oligomere oder Polymere der angegebenen Stöchiometrie sein. Für viele Metallhalogenide ist auch nicht eindeutig, ob die Verbindung unter definierten Bedingungen beispielsweise als Monomer, Dimer oder Oligomer vorliegt. Somit bezeichnet die Formel $MX_n$ auch Verbindungen der Formeln $(MX_n)_a$ mit a = 2, 3, 4, 5 oder bis zu $\infty$. Somit können die Verbindungen der Formel $MX_m$ und $MX_n$ beispielsweise definierte Moleküle, Polymere, wie lineare oder vernetzte Polymere, oder Salze mit einer Kristallstruktur sein.

Die Zahlenwerte m und n geben die Anzahl der Halogenatome pro Metallatom an. Sie sind im Falle von Halogenverbindungen immer aus ganzen Zahlen ausgewählt. Dabei gibt der Wert m oder n gleichzeitig die Oxidationsstufe des Metalls in der Verbindung an.

Bei der Auswahl von m und n ist zu beachten, dass n < m ist, damit eine Reduktion bezeichnet wird. Die Reduktion kann dabei insbesondere zu einer Verringerung der Oxidationsstufe der Vorläuferverbindung um einen Wert von 1 bis 6 führen. Das bedeutet, dass m - n = 1 bis 6 ist. Bevorzugt ist eine Reaktion, bei der die Oxidationsstufe des Metalls um bis zu drei Oxidationsstufen erniedrigt wird, so dass m - n = 1, 2 oder 3 ist. Besonders bevorzugt ist eine Reaktion, bei der die Oxidationsstufe des Metalls um 1 oder 2 Oxidationsstufen erniedrigt wird (m - n = 1 oder 2). Insbesondere ist es bevorzugt, dass die Reduktionsstufe des Metalls genau um 1 erniedrigt wird (m - n = 1).

In einer bevorzugten Ausführungsform ist m = 4, 5 oder 6. In einer bevorzugten Ausführungsform ist n = 3, 4 oder 5. In einer bevorzugten Ausführungsform ist m = 4, 5 oder 6 und n = 3, 4 oder 5. Besonders bevorzugt ist m = 6 und n = 5. Solche höheren Oxidationsstufen sind bevorzugt, weil die entsprechenden Metallhalogenide $MX_3$, $MX_4$, $MX_5$ oder $MX_6$ oft verschiedene analoge Metallhalogenide mit anderen Wertigkeiten aufweisen. Daher ist es besonders vorteilhaft, dass solche Verbindungen erfindungsgemäß durch selektive Reduktion in konkrete Produkte mit einer definierten niedrigeren Oxidationsstufe umgesetzt werden können.

Mit dem erfindungsgemäßen Verfahren kann insbesondere verhindert werden, dass eine weitere Reaktion der Verbindung $MX_n$ zu einem Folgeprodukt mit niedrigerer Oxidationsstufe, die kleiner n ist, stattfindet, beispielsweise zu Halogeniden der Formel $MX_{n-1}$ oder $MX_{n-2}$.

Metalle, die mehrere Halogenide in verschiedenen Oxidationsstufen bilden können, finden sich insbesondere in den Nebengruppen des Periodensystems der Elemente, sowie bei den Metallen der dritten bis sechsten Hauptgruppe. In einer bevorzugten Ausführungsform ist das daher Metall M ausgewählt ist aus einem Übergangsmetall, einem Lanthanoid, einem Actinoid, In, Tl, Sn, Pb, Sb und Bi. Besonders bevorzugt ist das Metall ein Übergangsmetall. Dabei ist es insbesondere bevorzugt, dass die Verbindung $MX_m$ eine Oxidationsstufe von 3, 4, 5 oder 6, insbesondere von 5 oder 6, aufweist. Besonders bevorzugt ist das Metall ein solches der Nebengruppe 1, 4, 5, 6, 7 oder 8 des Periodensystems. Die Metalle dieser Nebengruppen sind insbesondere dafür bekannt, dass sie verschiedene Halogenide mit verschiedenen Oxidationsstufen bilden können. Insbesondere kann das Metall ausgewählt sein aus Ti, V, Nb, Ta, Cr, Mo, W, Mn, Tc, Re, Fe, Ru, Os, Cu und Au. Ganz besonders bevorzugt ist das Metall ein Metall der sechsten Nebengruppe, insbesondere Wolfram. Es wurde gefunden, dass das Verfahren besonders effizient mit Wolframhalogeniden durchführbar ist.

Das Halogenid ist ausgewählt aus F, Cl, Br und I. Bevorzugt weisen die Verbindungen $MX_n$ und $MX_m$ dabei nur ein einziges Halogenid auf. Besonders bevorzugt ist das Halogenid X = Cl, Br oder I, insbesondere Cl oder Br. In einer bevorzugten Ausführungsform ist X = Cl. Metallchloride sind im Allgemeinen einfacher verfügbar und handhabbar als andere Halogenide und werden aus diesem Grund in der organischen Synthese und organometallischen Chemie häufig als Grundstoffe eingesetzt.

In einer bevorzugten Ausführungsform dient das Verfahren zur Herstellung von $WCl_5$ aus $WCl_6$. Es wurde gefunden, dass diese Reaktion in Gegenwart von Silanverbindungen besonders effizient und selektiv ist.

Das Verfahren umfasst einen Verfahrensschritt, bei dem die Vorläuferverbindung mit einer Silanverbindung zu dem gewünschten Metallhalogenid reduziert wird. Dieser Verfahrensschritt ist eine Reduktion, bei der die Silanverbindung als Reduktionsmittel wirkt und die Vorläuferverbindung reduziert. Diese Reduktion wird in einem Reaktionsansatz durchgeführt, der die Vorläuferverbindung, die Silanverbindung und gegebenenfalls ein Lösungsmittel enthält.

Erfindungsgemäß ist es auch möglich, Gemische der einzelnen Komponenten einzusetzen, beispielsweise zwei oder mehr verschiedene Silanverbindungen. Es ist jedoch bevorzugt, die Reaktion mit einer einzigen Silanverbindung und einer einzigen Vorläuferverbindung durchzuführen, da die Reaktion dann einfacher kontrolliert werden kann.

Als "Silanverbindung" wird im Rahmen dieser Anmeldung eine Verbindung bezeichnet, die mindestens eine funktionelle Gruppe Si-R aufweist, wobei R = Kohlenwasserstoff, Halogen oder Wasserstoff ist. Bevorzugt besteht die Silanverbindung aus Si, C, H und X, wobei X ein Halogen ist wie oben angegeben, bevorzugt Cl.

Die Silanverbindung ist bevorzugt ausgewählt der Gruppe bestehend aus Organosilanen, Silanen, Halogensilanen und Organohalogensilanen.

Gemäß der im Gebiet der Chemie üblichen Definition sind Silane chemische Verbindungen, die aus einem Silicium-Grundgerüst und Wasserstoff bestehen. Die Silane können verzweigt oder unverzweigt sein. Sie können cyclisch oder linear sein. Acyclische Silane weisen die allgemeinen Summenformel $Si_yH_{2y+z}$ auf. Ringförmige Silane (Cyclosilane) weisen die Summenformel $Si_yH_{2y}$ auf. Erfindungsgemäß bevorzugte Silane sind solche mit 1 bis 10 Siliciumatomen, insbesondere mit 2 bis 5 Siliciumatomen.

In einer bevorzugten Ausführungsform ist das Reduktionsmittel ein Organosilan. Als Organosilane werden gemäß der üblichen Definition Verbindungen bezeichnet, die Silicium und organische Reste aufweisen oder daraus bestehen. Bevorzugt sind die organischen Reste Kohlenwasserstoffreste. Die Verwendung von Organosilanen als Reduktionsmittel hat bei der erfindungsgemäßen Reduktionsreaktion viele Vorteile. Sie sind im allgemeinen leicht zugänglich, nicht teuer und in großen Mengen und hoher Reinheit verfügbar. Es wurde gefunden, dass sie unter milden Bedingungen eine gezielte, selektive Reduktion ermöglichen, so dass eine unerwünschte Weiterreduktion verhindert wird.

Organosilane können in flüssiger Form eingesetzt werden und sind daher gut dosierbar. Sie können aber nach der Reaktion leicht abgetrennt werden, beispielsweise durch Destillation, was bei Reaktionen mit instabilen thermisch instabilen Metallhalogeniden vorteilhaft ist.

In einer bevorzugten Ausführungsform besteht das Organosilan ausschließlich aus Siliciumatomen und daran gebundenen Resten R, die Kohlenwasserstoffe sind. Die Kohlenwasserstoffe können dabei ausgewählt sein aus Alkyl, Alkenyl, Aryl oder Araryl, und 1 bis 20 Kohlenstoffatome aufweisen. Die Kohlenwasserstoffreste können gesättigt oder ungesättigt sein. Die ungesättigten Kohlenwasserstoffreste können dabei eine einzige Doppelbindung aufweisen. In einer bevorzugten Ausführungsform sind die Kohlenwasserstoffreste gesättigt. Bevorzugt sind die Kohlenwasserstoffe Alkylreste mit 1 bis 20 Kohlenwasserstoffatomen, insbesondere mit 1 bis 5 Kohlenstoffatomen sind.

Bevorzugt sind die Kohlenwasserstoffreste Methyl- oder Ethylreste, insbesondere Methylreste. In einer bevorzugten Ausführungsform weist das Organosilan mindestens einen Methylrest auf, der an ein Siliciumatom gebunden ist. Besonders bevorzugt besteht das Organosilan aus Siliciumatomen und Methylresten. Das Organosilan weist bevorzugt 1 bis 5 Siliciumatome auf, insbesondere 1 bis 3 Siliciumatome, insbesondere zwei Siliciumatome.

Bevorzugt ist die Silanverbindung bei Raumtemperatur (25°C) flüssig. Bevorzugt ist die Silanverbindung bei der Durchführung des Verfahrens flüssig. Dies hat den Vorteil, dass sie als Lösungsmittel eingesetzt werden kann bzw. mit einem Lösungsmittel vermischt werden kann.

In einer weiteren bevorzugten Ausführungsform weist das Organosilan mindestens eine Si-H Bindung auf. Diese Ausführungsform ist besonders bevorzugt, wenn das Organosilan nur ein Si-Atom pro Molekül aufweist. In einer bevorzugten Ausführungsform besteht das Organosilan ausschließlich aus Siliciumatomen, daran gebundenen Resten R, die Kohlenwasserstoffe sind, sowie S-H Gruppen. Dabei ist bevorzugt pro Si-Atom, oder pro Molekül, eine einzige Si-H Bindung vorhanden.

In einer bevorzugten Ausführungsform ist das Organosilan ein Oligosilan. Damit werden Organosilane bezeichnet, die mindestens eine Si-Si-Bindung aufweisen. Bevorzugt weist das Oligosilan beispielsweise 2, 3, 4, 5 oder 6 Si-Atome pro Molekül auf. Dabei ist es bevorzugt, dass das Disilan neben den beiden Siliciumatomen ausschließlich Kohlenwasserstoffreste mit 1 bis 5 Kohlenstoffatomen, insbesondere Methyl oder Ethyl, aufweist. Oligosilane eignen sich besonders, um Metalle gezielt um eine Oxidationsstufe zu reduzieren.

Dabei ist das Organosilan besonders bevorzugt ein Disilan. Erfindungsgemäß wurde gefunden, dass sich Disilane ganz besonders eignen, um Metalle gezielt um eine Oxidationsstufe zu reduzieren. Disilane sind zudem im allgemeinen leicht zugänglich, nicht teuer, in großen Mengen und hoher Reinheit verfügbar, in flüssiger Form einsetzbar und nach der Reaktion leicht entfernbar. Besonders bevorzugt ist das Organosilan dabei Hexamethyldisilan. Diese Verbindung hat den Vorteil, dass sie nicht nur bei Raumtemperatur flüssig ist, sondern auch auf einfache Weise handhabbar, entfernbar und gut verfügbar ist. Erfindungsgemäß ist die kontrollierte Reduktion von Metallhalogeniden mit Hexamethyldisilan besonders effizient und kontrollierbar.

In einer weiteren Ausführungsform ist die Silanverbindung ein Halogensilan oder ein Organohalogensilan. Als Halogensilane bezeichnet man chemische Verbindungen aus der Gruppe der Silane, in welchen an das Siliciumatom ein oder mehrere Halogenatome gebunden sind. Geeignete Halogensilane können beispielsweise $Cl_3Si-SiCl_3$ oder $HSiCl_3$ sein. Enthält das Molekül zusätzlich einen organischen Rest, so spricht man von Organohalogensilanen. Dabei kann das Halogensilan oder Organohalogensilan mindestens eine, insbesondere genau eine Si-H Gruppe pro Si-Atom oder pro Molekül aufweisen.

In einer bevorzugten Ausführungsform wird die Reduktion in einem Lösungsmittel durchgeführt. Das Lösungsmittel ist bevorzugt ein organisches Lösungsmittel. Besonders bevorzugt enthält das Lösungsmittel Kohlenwasserstoffe oder besteht aus Kohlenwasserstoffen. Die Kohlenwasserstoffe können dabei aliphatische oder aromatische Kohlenwasserstoffe oder Gemische davon sein. In einer bevorzugten Ausführungsform sind die Kohlenwasserstoffe aromatische Kohlenwasserstoffe. Als aromatische Kohlenwasserstoffe sind übliche Lösungsmittel geeignet, wie substituiertes Benzol, insbesondere Toluol, Xylole, Ethylbenzol oder Cumol. Außerdem sind anellierte Arene geeignet, wie Naphthalin oder Anthracen.

Das Lösungsmittel wird allgemein so ausgewählt, dass es eine effiziente Reaktion ermöglicht. Es sollte dabei bevorzugt eine gute Mischbarkeit mit der Silanverbindung aufweisen und eine einzige flüssige Phase bildet. Die Vorläuferverbindung wird in dem Lösungsmittel gelöst oder suspendiert.

Besonders bevorzugt wird als Lösungsmittel Toluol eingesetzt. Es wurde gefunden, dass die Reduktion in Toluol besonders effizient ist und mit besonders wenigen Nebenreaktionen verläuft.

In einer bevorzugten Ausführungsform ist das molare Stoffmengenverhältnis der Vorläuferverbindung zu dem Reduktionsmittel zwischen 2:1 und 1:2 oder zwischen 1,5 : 1 und 1 : 1,5, oder insbesondere zwischen 1,1 : 1 und 1 : 1,1 , bezogen auf das Verhältnis von Metallatomen zu Siliciumatomen/Metalloxidationsstufendifferenz. Die Metalloxidationsstufendifferenz ist die zwischen Edukt und Produkt. Allgemein wird das Verhältnis von Vorläuferverbindung zu Reduktionsmittel so ausgewählt, dass die Übertragung von Elektronen in dem erforderlichen Ausmaß erfolgt. Dabei wird berücksichtigt, um wie viele Einheiten die Oxidationsstufe des Metalls verringert wird. Dabei wurde gefunden, dass eine Reduktion um eine Oxidationsstufe besonders effizient ist, wenn das molare Verhältnis von Metallatomen zu Silicium in der Silanverbindung etwa 1:1 ist. Eine Reduktion um 2 Oxidationsstufen ist besonders effizient, wenn das molare Verhältnis 1:2 ist. Bei einer Reduktion um mehr als eine Oxidationsstufe wird der Anteil der Siliciumatome entsprechend erhöht. Die idealen Stöchiometrien ergeben sich auch aus den Reaktionsgleichungen (I) und (II) oben und entsprechenden Reaktionsgleichungen für Reduktionen um mehr als 2 Oxidationsstufen. Gegebenenfalls kann dabei ein geringfügiger Unterschuss des Reduktionsmittels eingesetzt werden, um eine Weiterreduktion zu verhindern. Abhängig vom Oxidationspotential des zu reduzierenden Metallhalogenids kann dabei alternativ auch ein Überschuss des Reduktionsmittels eingesetzt werden, insbesondere wenn das Edukt nicht $WCl_6$ ist. Überschuss und Unterschuss können beispielsweise bis zu 10 Mol.% oder bis zu 5 Mol.% des idealen Verhältnisses betragen.

In einer weiteren Ausführungsform wird ein deutlicher Überschuss des Reduktionsmittels gegenüber der Vorläuferverbindung eingesetzt. Diese Ausführungsform kann von Vorteil sein, wenn eine Überreaktion nicht oder nur unwesentlich stattfindet, und dabei insbesondere wenn das Reduktionsmittel einfach verfügbar ist. Dann kann durch einen deutlichen Überschuss des Reduktionsmittels eine besonders schnelle oder vollständige Reduktion erreicht werden. Dabei ist das molare Stoffmengenverhältnis der Vorläuferverbindung zu dem Reduktionsmittel beispielsweise größer als 1:10 oder größer als 1:20; oder zwischen 1:5 und 1:500 oder zwischen 1:10 und 1:100, bezogen auf das Verhältnis von Metallatomen zu Siliciumatomen/Metalloxidationstufendifferenz.

Die Reaktion verläuft bevorzugt gemäß Reaktionsgleichung (I) oder (II):

$$2\ MX_m\ +\ R_3Si\text{-}SiR_3\ =\ 2\ MX_{m-1}\ +\ 2\ R_3Si\text{-}X \qquad\qquad (I)$$

$$MX_m\ +\ R_3Si\text{-}SiR_3\ =\ 2\ MX_{m-2}\ +\ 2\ R_3Si\text{-}X \qquad\qquad (II)$$

Bei Reaktionsgleichung (I) ist n = m-1 und bei Reaktionsgleichung (II) ist n = m-2.

Mit der erfindungsgemäßen Reduktion kann auch bei niedrigen Temperaturen eine hohe Ausbeute erreicht werden. Dies ist sehr vorteilhaft, da Metallhalogenide der Formel $MX_n$ und $MX_m$, die in verschiedenen Oxidationsstufen vorkommen, oft thermisch instabil sind. Es ist insbesondere nicht erforderlich, das Reaktionsgemisch zu erwärmen. In einer bevorzugten Ausführungsform wird die Reduktion bei einer Temperatur <60°C, insbesondere <50°C, oder <40°C durchgeführt. In einer weiteren bevorzugten Ausführungsform wird die Reduktion bei einer Temperatur von 10°C bis 50°C durchgeführt. Die Reduktion wird besonders bevorzugt bei einer Temperatur von 15°C bis 40°C durchgeführt, insbesondere zwischen 20°C und 30°C, oder bei Raumtemperatur (25°C). Die Reaktion eignet sich daher insbesondere, wenn sich mindestens ein Edukt oder Produkt oberhalb 100°C, oder oberhalb 150°C, oder oberhalb 200°C zersetzt oder verflüchtigt. In einer weiteren bevorzugten Ausführungsform kann die Temperatur gegen Ende der Reaktion etwas erhöht werden. Dies kann vorteilhaft sein, um eine möglichst vollständige Umsetzung des Metallhalogenids zu erreichen. Beispielsweise kann die Reaktion zunächst wie oben angegeben ausgewählt werden, und im weiteren Verlauf um 10 bis 50°C erhöht werden.

Die Reduktion wird bevorzugt unter Sauerstoffausschluss durchgeführt, beispielsweise unter Inertgasatmosphäre, wobei als Inertgas bevorzugt Stickstoff eingesetzt wird. Die Reduktion erfolgt bevorzugt unter Rühren.

Die Reduktion kann als Batch-Verfahren oder kontinuierlich durchgeführt werden. Die Reduktion wird bevorzugt bei Normaldruck durchgeführt. Die Zuführung von Energie, beispielsweise in Form von Licht oder Strahlung, ist nicht erforderlich.

In einer bevorzugten Ausführungsform enthält das Reaktionsgemisch nur die Vorläuferverbindung, die Silanverbindung und gegebenenfalls das Lösungsmittel. Der Zusatz weiterer Hilfsstoffe, wie von Katalysatoren, ist nicht erforderlich. Insbesondere ist es nicht erforderlich, weitere Metalle oder Metallverbindungen hinzuzufügen, wie Aluminium, Zinn oder Verbindungen davon. Insgesamt ist also vorteilhaft, dass die Reaktion mit nur wenigen Ausgangsstoffen und unter sehr milden Bedingungen effizient durchführbar ist.

Es wurde gefunden, dass die erfindungsgemäße Reaktion im Allgemeinen relativ schnell verläuft. Die Reaktion kann aber auch über einen längeren Zeitraum durchgeführt werden, um eine möglichst vollständige Umsetzung zu erreichen. Dies ist möglich, weil erfindungsgemäß die potentielle Folgereaktion zu einem niedrigerwertigen Metallhalogenid oder Metall nicht oder nur unwesentlich stattfindet. Die Reaktion mit Silanverbindungen als Reduktionsmitteln kann somit auch über längere Zeiträume selektiv durchgeführt werden. Dies hat den Vorteil, dass die Reaktion nicht nach einer bestimmten Zeit unterbrochen werden muss, um eine weitere Reaktion zu verhindern. Dagegen muss die Reduktion gemäß bekannten Verfahren, beispielsweise Thorn-Csanyi, 1986, bereits nach kurzer Zeit abgebrochen werden muss, um die weitere Reduktion des gewünschten Metallhalogenids so weit wie möglich zu verhindern. Bei der erfindungsgemäßen Reaktion können daher insgesamt höhere Ausbeuten erzielt werden. Die Durchführung ist einfacher, weil die Reaktion nicht aufwendig eingestellt und kontrolliert werden muss, um ein Optimum für die Reaktionsausbeute zu erreichen. Auch aus diesem Grund ist das erfindungsgemäße Verfahren einfacher und effizienter als bekannte Verfahren.

Das erfindungsgemäße Verfahren wird bevorzugt über einen Zeitraum von mindestens 5 min, mindestens 10 min, mindestens 30 min, mindestens 1 h, mindestens 2 h oder mindestens 5 h. Dabei kann die Reaktionsdauer beispielsweise von 5 min bis zu 48 h, oder von 20 min bis zu 36 h betragen. Mit dem Zeitraum wird die Zeitspanne bezeichnet ab Beginn der Reduktionsreaktion, bis die Reaktion beendet wird. Bevorzugt wird nach dieser Zeit das Metallhalogenid der Formel $MX_n$ in einer Ausbeute von >90%, bevorzugt >95% erhalten. Allgemein wurde gefunden, dass die Reaktion nach Vermischung der Edukte relativ schnell einsetzt, so dass keine besondere Aktivierungsenergie aufgewendet werden muss. Die Reaktionsgeschwindigkeit kann im weiteren Verlauf begrenzt sein, weil das Metallhalogenid schwerlöslich und damit nur eingeschränkt zugänglich sein kann.

In einer bevorzugten Ausführungsform wird das Verfahren für relativ kurze Zeit durchgeführt, beispielsweise in einem Zeitraum von 5 min bis 60 min, insbesondere von 10 min bis 30 min. Da die erfindungsgemäße Reaktion sehr schnell verläuft, kann dadurch, falls gewünscht, die Herstellung beschleunigt werden.

In einer bevorzugten Ausführungsform wird das Verfahren relativ lange Zeit durchgeführt, beispielsweise für mindestens 5 h oder mindestens 10 h, oder in einem Zeitraum von 1 h bis zu 48 h, oder von 5 h bis zu 36 h. Dadurch kann gegebenenfalls die Ausbeute verbessert werden, insbesondere wenn die Reaktion wegen der eingeschränkten Löslichkeit des Metallhalogenids nicht schnell verläuft.

In einer bevorzugten Ausführungsform wird die Vorläuferverbindung vorgelegt und danach die Silanverbindung kontinuierlich zugegeben. Dabei ist es bevorzugt, die Vorläuferverbindung zunächst in Lösungsmittel zu lösen oder zu suspendieren. Beispielsweise kann die Zugabe der Silanverbindung über einen Zeitraum von 5 min bis 5 h erfolgen, insbesondere von 10 min bis 90 min. In einer weiteren Ausführungsform kann die Silanverbindung auch auf einmal, also nicht kontinuierlich, zugegeben werden.

Es ist ein Vorteil der Reduktionsreaktion, dass sie in einem Schritt erfolgt. Es ist nicht erforderlich, während der Reduktion weitere Schritte durchzuführen, zum Beispiel weitere Verbindungen hinzuzufügen. Es ist auch nicht erforderlich, die Reaktion nach einer definierten Zeit abzubrechen.

Nach Beendigung der Reduktion liegt das Reaktionsprodukt im Allgemeinen als ausgefällter Feststoff vor. Bevorzugt werden anschließend das Lösungsmittel und/oder flüchtige Komponenten abgetrennt. Dies kann mit üblichen Maßnahmen erreicht werden, wie Filtrieren, Waschen und Trocknen. Bevorzugt wird das Reaktionsprodukt zunächst filtriert und gewaschen. Dabei kann mit dem Lösungsmittel und/oder mit anderen Lösungsmitteln, beispielsweise Pentan, gewaschen werden.

Anschließend wird das Filtrat bevorzugt getrocknet. Besonders geeignet ist dabei eine Destillation im Vakuum, um zu hohe Temperaturen zu vermeiden. Es wird ein Feststoff erhalten, der im Wesentlichen aus dem gewünschten Metallhalogenid besteht.

In einer bevorzugten Ausführungsform wird das durch die Reduktion hergestellte Metallhalogenid der Formel $MX_n$ durch eine Sublimation gereinigt. Die Sublimation wird bevorzugt unmittelbar mit dem Rohprodukt der Reduktionsreaktion durchgeführt, von dem vorher das Lösungsmittel abgetrennt wurde. Es wurde festgestellt, dass durch Sublimation eine effiziente Trennung des gewünschten Metallhalogenids von Nebenprodukten erreicht werden kann. Insbesondere wenn die in dem Reaktionsansatz enthaltenen Verbindungen, wie die Silanverbindung, Lösungsmittel, Edukte, Nebenprodukte und/oder Lösungsmittel, flüchtig sind, kann das gewünschte Metallhalogenid in hochreiner Form erhalten werden. Die Sublimation ist insbesondere geeignet, wenn Wolframpentachlorid aus Wolframhexachlorid hergestellt wird.

Es ist ein weiterer Vorteil des Verfahrens, dass dieses auch im großtechnischen und industriellen Maßstab effizient und mit hoher Ausbeute durchgeführt werden kann. In einer bevorzugten Ausführungsform wird das Verfahren mit einer Ausgangsmenge der Vorläuferverbindung $MX_m$ durchgeführt, die > 5 kg, > 10 kg, > 15 kg oder > 50 kg ist. Beispielsweise kann die Menge der Vorläuferverbindung zwischen 5 kg und 500 kg, insbesondere zwischen 10 kg und 100 kg liegen. Es wurde überraschenderweise gefunden, dass die Reaktion auf einfache Weise hochskaliert werden kann, wobei sehr hohe Ausbeuten oberhalb 80% oder sogar oberhalb 90% erreicht werden können. Dies war nicht ohne weiteres zu erwarten, da im technischen Gebiet der industriellen Chemie bekannt ist, dass die Hochskalierung von Reaktionen im kleinen Maßstab regelmäßig zu deutlich niedrigeren Ausbeuten führt oder überhaupt nicht möglich ist.

In einer bevorzugten Ausführungsform wird bei dem erfindungsgemäßen Verfahren das Metallhalogenid der Formel $MX_n$ in einer Ausbeute von >80%, bevorzugt >85% oder >90%, besonders bevorzugt >93% oder >95% erhalten, bezogen auf die vor der Reduktion eingesetzte molare Menge der Vorläuferverbindung. Bevorzugt wird eine solche Ausbeute nach der Reduktionsreaktion und/oder nach der Sublimation erhalten.

Solche Ausbeuten sind für Teilreduktionen, bei denen das Produkt durch weitere Reduktion wieder abgereichert werden kann, relativ hoch.

Bevorzugt wird das gewünschte Metallhalogenid nach der ersten Sublimation in einer Reinheit von > 98 Gew.-%, insbesondere > 99,5 Gew.-%, oder besonders bevorzugt >99,9 Gew.% erhalten. Die Reinheit kann so hoch sein, dass der Anteil an Verunreinigungen <500 ppb ist, oder sogar <100 ppb (gemessen durch Massenspektrometrie mit induktiv gekoppeltem Plasma; ICP-MS). Solche hochreinen Produkte können insbesondere erhalten werden, wenn in dem Reaktionsansatz flüchtige Komponenten eingesetzt werden.

Es ist ein weiterer Vorteil des Verfahrens, dass bei einer Sublimation aus dem Reaktionsgemisch nach der Reduktion nur wenig Sublimationsrückstand verbleibt. So wurde gefunden, dass nach der Sublimation nur etwa 1 bis 3% fester Rückstand verbleibt. Dies zeigt, dass bereits bei der Reduktion ein hochreines Produkt erhalten wird und dass die Abtrennung des Produktes von dem Reaktionsansatz durch Sublimation relativ unproblematisch ist. Bevorzugt verbleibt bei der Sublimation weniger als 5%, insbesondere weniger als 3% fester Rückstand.

Gegenstand der Erfindung ist auch eine Zusammensetzung, die gemäß dem erfindungsgemäßen Verfahren erhältlich ist. Die Zusammensetzung enthält bevorzugt die Verbindung der Formel $MX_n$ in einer Reinheit >80 Gew.%, bevorzugt >90 Gew.% oder >95 Gew.%. Die Zusammensetzung ist in einer bevorzugten Ausführungsform der aus der Reduktion erhaltene Feststoff. Gegebenenfalls können dabei Lösungsmittel und/oder flüchtige Komponenten abgetrennt sein, insbesondere durch Filtrieren, Waschen und/oder Trocknen.

Die Zusammensetzung ist ein wichtiges Zwischenprodukt bei der Herstellung von hochreinen Metallhalogeniden, die insbesondere durch Sublimation aus der Zusammensetzung abgetrennt werden können. Die Zusammensetzung kann aber auch direkt als Quelle des Metallhalogenids in einer Nachfolgereaktion verwendet werden. Hochreine Metallhalogenide werden insbesondere für Reaktionen in der Gasphase eingesetzt, bei denen das Metall oder eine Metallverbindung auf einem Substrat abgeschieden wird. Ein solcher Prozess ist insbesondere CVD (chemical vapor deposition), und dabei insbesondere ALD (atomic layer deposition) oder MOCVD (metallorganische chemische Gasphasenabscheidung). Da die erfindungsgemäße Zusammensetzung einen hohen Anteil des gewünschten Metallhalogenids enthält, und im Übrigen ohne flüchtige Bestandteile erhalten werden kann, kann sie unmittelbar als Quelle für das Metallhalogenid für eine Reaktion in der Gasphase eingesetzt werden. Dabei kann das Metallhalogenid durch Sublimation aus der Zusammensetzung abgetrennt und direkt der Reaktion in der Gasphase zugeführt wird.

Die Zusammensetzung kann in einer weiteren Ausführungsform das durch Sublimation erhaltene hochreine Produkt sein. Diese Zusammensetzung kann eine außerordentlich hohe Reinheit aufweisen, so dass - wie oben angegeben - beispielsweise der Anteil an Verunreinigungen <100 ppb sein kann. Eine solche Zusammensetzung ist auch durch die Abwesenheit detektierbarer Verunreinigungen anderer Metalle charakterisiert, weil das Verfahren regelmäßig ohne Zusatz weiterer Metalle oder Metallverbindungen durchgeführt werden kann. Dies ist bei hochsensiblen Folgeprozessen wie der Halbleiterherstellung vorteilhaft, bei denen das gewünschte Metall aus der Gasphase abgeschieden wird und Verunreinigungen unbedingt zu vermeiden sind.

Gegenstand der Erfindung ist auch die Verwendung von Silanverbindungen, insbesondere von Organosilanen, zur Reduktion einer Verbindung der Formel $MX_n$ aus einer Vorläuferverbindung der Formel $MX_m$, wobei die Verbindungen $MX_n$ und $MX_m$ ausgewählt sind wie oben beschrieben.

Die erfindungsgemäßen Verfahren und die Verwendungen lösen die der Erfindung zugrunde liegende Aufgabe. Es wird ein einfaches und effizientes Verfahren bereitgestellt, um Metallhalogenide in hoher Ausbeute herzustellen. Dabei wird durch eine Silanverbindung als Reduktionsmittel erreicht, dass die Reduktion einer Vorläuferverbindung der Formel $MX_m$ selektiv zu einem gewünschten Metallhalogenid erfolgt, ohne dass eine wesentliche Folgereaktion zu Metallhalogeniden mit niedrigeren Oxidationsstufen oder zum Metall erfolgt. Dies hat den großen Vorteil, dass die Reaktion einfach eingestellt und kontrolliert werden kann, und dass eine lange Reaktionsdauer möglich ist, die im Allgemeinen zu einer hohen Produktausbeute führt. Viele Silanverbindungen oder Organosilane sind allgemein relativ kostengünstig, in großen Mengen und in hoher Reinheit verfügbar, und zudem auf einfache Weise handhabbar. Bei der Reaktion entstehen Siliciumhalogenide oder Siliciumhalogenid-Alkylverbindungen, die relativ einfach aufbereitet und entsorgt werden können. Insgesamt ist das erfindungsgemäße Verfahren einfach und kosteneffizient, weil es unter milden Bedingungen durchgeführt werden kann und nur wenige Komponenten erfordert. Die Komponenten können so ausgewählt werden, dass sie nach Reaktionsende einfach entfernt werden können und somit die Ausbeute nicht verringern. Es ist ein weiterer Vorteil, dass das Verfahren ohne weiteres auch im industriellen Maßstab durchgeführt werden kann, wobei ebenfalls hohe Ausbeuten erzielt werden.

Ausführungsbeispiele

Chemikalien

Die eingesetzten Chemikalien der Beispiele 1 bis 3 sind in der Tabelle 1 zusammengefasst.

Tabelle 1: eingesetzte Chemikalien der Beispiele 1 bis 3

| Verbindung | Summenformel | CAS-Nr. | Anmerkung | Molmasse g/mol |
|---|---|---|---|---|
| Wolframhexachlorid | $WCl_6$ | 13283-01-7 | Reinheit 99,9 %, Lagerung im Handschuhkasten | 396,61 |

(fortgesetzt)

| Verbindung | Summenformel | CAS-Nr. | Anmerkung | Molmasse g/mol |
|---|---|---|---|---|
| Hexamethyldisilan (HMDSi) | $Si_2C_6H_{18}$ | 1450-14-2 | Reinheit 99,5 % (ermittelt durch GC), Lagerung über Molsieb 4 Å | 146,38 |
| Toluol | $C_7H_8$ | 108-88-3 | wasserfrei, destilliert über Na/ Benzophenon, Lagerung über Molsieb 4Å und $Al_2O_3$ | 92,14 |
| Pentan | $C_5H_{12}$ | | wasserfrei | 72,15 |
| Wolframpentachlorid | $WCl_5$ | 13470-14-9 | Reaktionsprodukt | 43,67 |

Thermogravimetrie (TGA) mit simultaner Differenz-Thermoanalyse (SDTA)

Die thermogravimetrischen Analysen (TGA), sowie die Einwaagen dafür, erfolgten unter Stickstoffatmosphäre in einem Handschuhkasten mit einem Gerät der Marke TGA 3+ (Hersteller: Mettler Toledo; Auswertung mit Software der Marke Star[e]). Für die Messung wurden ca. 6-12 mg einer Probe in einem Aluminiumoxid-Tiegel gewogen. Als Ergebnisse wurden die TGA (Masseverlust) sowie SDTA-Kurven (Wärmestrom) erhalten. Aus der TGA-Kurve wurde jeweils noch die erste Ableitung (DTG-Kurve, Geschwindigkeit der Massenänderung) gebildet. Die Aufheizrate betrug 10 K/min oder 20 K/min.

Beispiel 1

Wolframhexachlorid wurde mit Hexamethyldisilan (HMDSi) gemäß der folgenden Reaktionsgleichung zu Wolframpentachlorid reduziert. Dabei wurden Chemikalien und Stoffmengen eingesetzt wie in Tabelle 2 angegeben. Die Reaktionszeit betrug 24h.

**Fehler! Es ist nicht möglich, durch die Bearbeitung von Feldfunktionen Objekte zu erstellen.**

Tabelle 2: Chemikalien und Stoffmengen gemäß Beispiel 1

| Chemikalie | Einwaage (g) | Volumen (mL) | Stoffmenge (mmol) | Äquivalente (eq) |
|---|---|---|---|---|
| $WCl_6$ | 0,907 | - | 2,287 | 1,00 |
| HMDSi | 0,184 | - | 1,258 | 0,55 |
| Toluol | - | 25 | - | - |

In einen ausgeheizten und unter Stickstoff gestellten 250 mL Schlenkkolben wurde $WCl_6$ in einem Handschuhkasten (Glovebox) eingewogen. Außerhalb des Handschuhkastens wurden Toluol und anschließend das Hexamethyldisilan unter $N_2$-Strom zugegeben und der Kolben fest verschlossen. Es wurde bei Raumtemperatur gerührt.

Der entstandene Feststoff wurde anschließend durch eine Umkehrfritte (G4, ca. 10-16 $\mu$m Porendurchmesser) unter Stickstoff filtriert und nochmals mit trockenem Toluol (2x mit 10 mL) und danach mit trockenem n-Pentan (2x mit 10 mL) gespült. Anschließend wurde mehrere Stunden bei Raumtemperatur und Feinvakuum ($10^{-3}$ mbar) getrocknet. Die Aufbewahrung erfolgte unter Stickstoffatmosphäre im Handschuhkasten.

Etwa die Hälfte des Produkts wurde in eine Sublimationsapparatur gewogen und ca. 5 h bei 160°C Ölbadtemperatur im Feinvakuum ($10^{-3}$mbar) sublimiert. Es bildeten sich am Kühlfinger violette Kristalle.

Beispiel 2

Wolframhexachlorid wurde mit Hexamethyldisilan zu Wolframpentachlorid reduziert wie in Beispiel 1 beschrieben mit folgenden Abwandlungen: Die Stoffmengen wurden gemäß Tabelle 3 eingesetzt. Die Reaktionszeit betrug 1 h.

Tabelle 3: Chemikalien und Stoffmengen gemäß Beispiel 2

| Chemikalie | Einwaage (g) | Volumen (mL) | Stoffmenge (mmol) | Äquivalente (eq) |
|---|---|---|---|---|
| $WCl_6$ | 16,089 | - | 40,566 | 1,00 |
| HMDSi | 2,850 | - | 19,472 | 0,48 |
| Toluol | - | 100 | - | - |

Beispiel 3

Wolframhexachlorid wurde mit Hexamethyldisilan zu Wolframpentachlorid reduziert wie in Beispiel 1 beschrieben mit folgenden Abwandlungen: Die Stoffmengen wurden gemäß Tabelle 4 eingesetzt. Die Reaktionszeit betrug 20h.

Tabelle 4: Chemikalien und Stoffmengen gemäß Beispiel 3

| Chemikalie | Einwaage (g) | Volumen (mL) | Stoffmenge (mmol) | Äquivalente (eq) |
|---|---|---|---|---|
| $WCl_6$ | 13,917 | - | 35,094 | 1,00 |
| HMDSi | 2,465 | - | 16,845 | 0,48 |
| Toluol | - | 100 | - | - |

Ergebnisse:

Die Ausbeuten an Wolframpentachlorid vor und nach der Sublimation sind in Tabelle 5 zusammengefasst.

Tabelle 5: Übersicht der Ausbeuten an Wolframpentachlorid

| Beispiel | Bedingungen | Gesamtausbeute Rohprodukt nach Fällung (%) | Ausbeute Sublimat (%) | Rückstand Sublimation (%) |
|---|---|---|---|---|
| 1 | 0,55 eq, 24 h | 77,7 | -* | -* |
| 2 | 0,48 eq, 1 h | 87,3 | 92,1 | 2,7 |
| 3 | 0,48 eq, 20 h | 89,4 | 93,8 | 1,4 |
| *Reaktion im kleinen Maßstab, daher wurde vorerst keine Sublimation durchgeführt. Die fehlenden Prozente aus der Addition von "Sublimat-Ausbeute" und "Rückstand" sind möglicherweise Lösungsmittelreste, die beim Trocknen des Rohproduktes nicht entfernt wurden und Verluste beim Abkratzen des Sublimates aus dem Sublimationsrohr. | | | | |

Die Ergebnisse zeigen, dass mit Hexamethyldisilan als Reduktionsmittel bereits nach relativ kurzer Zeit (1h) das gewünschte Produkt in hoher Ausbeute und Reinheit erhalten werden kann. Nach etwa 20 h kann ein nahezu rückstandslos sublimierbares Rohprodukt erhalten werden. Eine Überreduktion findet bei Einsatz stöchiometrisch äquivalenter Mengen (bzw. leichtem Unterschuss), bezogen auf das Verhältnis von Metall zu Si, fast nicht statt.

Einmal sublimiertes Produkt sublimiert bei einer zweiten Sublimation unter Vakuum vollständig, was bedeutet, dass unter Vakuum bei hohen Temperaturen (bis mind. 160°C) keine Zersetzung stattfindet. Bei Messungen des thermischen Abbaus unter Normaldruck (Stickstoffatmosphäre, TGA-Messung) kann bei unterschiedlichen Aufheizraten (="Verweilzeiten") ein Abbau detektiert werden. Dies ist anhand des Masseverlusts bei der TGA-Messung ersichtlich. Eine Erhöhung der Heizrate bei der TGA-Messung begünstigt den vollständigen Masseverlust des Produkts.

Beispiel 4: Durchführung im großtechnischen Maßstab

Wolframhexachlorid wurde mit Hexamethyldisilan zu Wolframpentachlorid reduziert. Dabei wurden Chemikalien gemäß Tabelle 1 eingesetzt, wobei HMDSi und Lösungsmittel in hochreiner Form wie vom Hersteller erhalten eingesetzt wurden. In einem mit Stickstoff inertisiertem 100 L Reaktor werden 66 L Toluol vorgelegt. 19,0 kg (47,86 mol, 2,03 eq.) Wolframhexachlorid werden unter Rühren bei 100 U/min zugegeben und mit 10 L Toluol nachgewaschen. Die Vorlauftemperatur wird auf 30°C eingestellt. 3,47 kg (23,56 mol, 1 eq) Hexamethyldisilan werden innerhalb 1 h zudosiert und anschließend mit 5 L Toluol nachgewaschen. Es wird 1 Stunde bei 100 U/min und einer Vorlauftemperatur von 20°C nachgerührt. Das Reaktionsgemisch wird filtriert und der Filterkuchen mit 10 L Toluol verdrängend gewaschen. Anschließend wird der Filterkuchen dreimal mit je 10 L Pentan gewaschen. Das Produkt wird bei 40°C im Vakuum getrocknet. Die Ausbeute betrug 16,2 kg (94%, bezogen auf $WCl_6$).

Das Ergebnis zeigt, dass die Reaktion ohne wesentlichen Verlust an Ausbeute und Produktqualität hochskaliert werden kann, wobei übliche leicht verfügbare Chemikalien eingesetzt werden können. Diese Vorteile sind für die industrielle Produktion von hoher Bedeutung.

**Patentansprüche**

1. Verfahren zur Herstellung einer Verbindung der Formel $MX_n$ aus einer Vorläuferverbindung der Formel $MX_m$, wobei

   M ein Metall ist,
   X ein Halogenid ist, ausgewählt ist aus F, Cl, Br, J,
   m ausgewählt ist aus einer Zahl von 2 bis 8, und
   n ausgewählt ist aus einer Zahl von 1 bis 7, mit der Maßgabe, dass n < m ist, umfassend einen Verfahrensschritt, bei dem die Vorläuferverbindung mit einer Silanverbindung zu der Verbindung der Formel $MX_n$ reduziert wird.

2. Verfahren Anspruch 1, wobei m - n = 1 oder 2 ist, und/oder
   wobei m = 4, 5 oder 6 und n = 3, 4 oder 5 ist.

3. Verfahren gemäß mindestens einem der vorhergehenden Ansprüche, wobei das Metall M ausgewählt ist aus einem Übergangsmetall, einem Lanthanoid, einem Actinoid, In, TI, Sn, Pb, Sb und Bi.

4. Verfahren gemäß mindestens einem der vorhergehenden Ansprüche, wobei X = Cl ist.

5. Verfahren gemäß mindestens einem der vorhergehenden Ansprüche zur Herstellung von $WCl_5$ aus $WCl_6$.

6. Verfahren gemäß mindestens einem der vorhergehenden Ansprüche, wobei die Silanverbindung ausgewählt der Gruppe bestehend aus Organosilanen, Silanen, Halogensilanen und Organohalogensilanen.

7. Verfahren gemäß mindestens einem der vorhergehenden Ansprüche, wobei die Silanverbindung ein Organosilan ist, das mindestens einen Methylrest aufweist, der an ein Siliciumatom gebunden ist.

8. Verfahren gemäß mindestens einem der vorhergehenden Ansprüche, wobei die Silanverbindung ein Oligosilan oder ein Disilan ist, bevorzugt Hexamethyldisilan.

9. Verfahren gemäß mindestens einem der vorhergehenden Ansprüche, wobei die Reduktion in einem Lösungsmittel durchgeführt wird, das aromatische Kohlenwasserstoffe aufweist, wobei das Lösungsmittel bevorzugt Toluol ist.

10. Verfahren gemäß mindestens einem der vorhergehenden Ansprüche, wobei das molare Stoffmengenverhältnis der Vorläuferverbindung zu dem Reduktionsmittel zwischen 2:1 und 1:2 ist, bezogen auf das Verhältnis von Metallatomen zu Siliciumatomen/Metalloxidationsstufendifferenz, und/oder
    wobei die Reduktion bei einer Temperatur von 10°C bis 50°C durchgeführt wird.

11. Verfahren gemäß mindestens einem der vorhergehenden Ansprüche, wobei mindestens 10 kg der Vorläuferverbindung der Formel $MX_m$ eingesetzt werden.

12. Verfahren gemäß mindestens einem der vorhergehenden Ansprüche, wobei das Metallhalogenid der Formel $MX_n$ nach der Reduktion durch Sublimation gereinigt wird.

13. Verfahren gemäß mindestens einem der vorhergehenden Ansprüche, wobei nach der Reduktion und/oder nach der Sublimation das Metallhalogenid der Formel $MX_n$ in einer Ausbeute von >90% erhalten wird, bezogen auf die eingesetzte molare Menge der Vorläuferverbindung.

14. Zusammensetzung, welche die Verbindung der Formel $MX_n$ in einer Reinheit >80 Gew.%, bevorzugt >90 Gew.% enthält, erhältlich durch ein Verfahren gemäß mindestens einem der vorhergehenden Ansprüche.

15. Verwendung von Silanverbindungen, insbesondere von Organosilanen, zur Reduktion einer Verbindung der Formel $MX_n$ aus einer Vorläuferverbindung der Formel $MX_m$, wobei

M ein Metall ist,
X ein Halogenid ist, ausgewählt ist aus F, Cl, Br, J,
m ausgewählt ist aus einer Zahl von 2 bis 8, und
n ausgewählt ist aus einer Zahl von 1 bis 7, mit der Maßgabe, dass n < m ist.

Europäisches Patentamt
European Patent Office
Office européen des brevets

## EUROPÄISCHER RECHERCHENBERICHT

Nummer der Anmeldung

EP 17 18 1487

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HAYATO TSURUGI ET AL: "Salt-Free Reducing Reagent of Bis(trimethylsilyl)cyclohexadiene Mediates Multielectron Reduction of Chloride Complexes of W(VI) and W(IV)", JOURNAL OF THE AMERICAN CHEMICAL SOCIETY, Bd. 135, Nr. 16, 15. April 2013 (2013-04-15), Seiten 5986-5989, XP055439941, US ISSN: 0002-7863, DOI: 10.1021/ja401589a * das ganze Dokument * ----- | 1-15 | INV. C01G41/04 |
| X | CHRISTINA PERSSON ET AL: "Reduction of tungsten(VI) and molybdenum(V) by allyltrimethylsilane and cyclopentene. Simple high yield syntheses of MoCl4(OEt2)2, MoCl4(dme), WCl4(thf)2, WCl4(dme) and WOCl3(thf)2", INORGANICA CHIMICA ACTA, Bd. 203, Nr. 2, 1. Januar 1993 (1993-01-01), Seiten 235-238, XP055439954, NL ISSN: 0020-1693, DOI: 10.1016/S0020-1693(00)81663-1 | 1-7,15 | |
| Y | * Seite 235, Spalte 2 - Seite 236, Spalte 2, Absatz 1 * ----- -/-- | 1-15 | RECHERCHIERTE SACHGEBIETE (IPC) C01G |

Der vorliegende Recherchenbericht wurde für alle Patentansprüche erstellt

| Recherchenort | Abschlußdatum der Recherche | Prüfer |
|---|---|---|
| München | 1. Februar 2018 | Timmermans, Michel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

Nummer der Anmeldung

EP 17 18 1487

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ROCÍO ARTEAGA-MÜLLER ET AL: "New Tantalum Ligand-Free Catalyst System for Highly Selective Trimerization of Ethylene Affording 1-Hexene: New Evidence of a Metallacycle Mechanism", JOURNAL OF THE AMERICAN CHEMICAL SOCIETY, Bd. 131, Nr. 15, 22. April 2009 (2009-04-22), Seiten 5370-5371, XP055439956, US ISSN: 0002-7863, DOI: 10.1021/ja8100837 | 1-4,6,7, 15 | |
| Y | * Seite 5370, Spalte 2; Abbildung 1 * ----- | 1-15 | |
| X | TSURUGI HAYATO ET AL: "Carbon Radical Generation by d0 Tantalum Complexes with .alpha.-Diimine Ligands through Ligand-Centered Redox Processes", JOURNAL OF THE AMERICAN CHEMICAL SOCIETY, AMERICAN CHEMICAL SOCIETY, US, Bd. 133, Nr. 46, 23. November 2011 (2011-11-23), Seiten 18673-18683, XP008165886, ISSN: 0002-7863, DOI: 10.1021/JA204665S [gefunden am 2011-10-07] | 1-4,6,7, 15 | RECHERCHIERTE SACHGEBIETE (IPC) |
| Y | * Seite 18676; Abbildung 1 * ----- | 1-15 | |

Der vorliegende Recherchenbericht wurde für alle Patentansprüche erstellt

| Recherchenort | Abschlußdatum der Recherche | Prüfer |
|---|---|---|
| München | 1. Februar 2018 | Timmermans, Michel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 2 von 2

**IN DER BESCHREIBUNG AUFGEFÜHRTE DOKUMENTE**

**In der Beschreibung aufgeführte Nicht-Patentliteratur**

- **MCCANN et al.** Inorganic Synthesis. McGraw-Hill, Inc, 1972, vol. XIII
- **THORN-CSANYI et al.** *Journal of Molecular Catalysis,* 1991, 261-267
- *JOURNAL OF MOLECULAR CATALYSIS,* 1986, 31-38
- *JOURNAL OF MOLECULAR CATALYSIS,* 1985, 37-48